# EUROPEAN PATENT APPLICATION

(11) **EP 2 241 367 A1**
(43) Date of publication of application: **20.10.2010**
(21) Application number: 08867158.1
(22) Date of filing: 27.12.2008
(51) Int. Cl.: B01D 53/62, B01D 53/34, B01D 53/38, B01D 53/81, C12N 1/00

(54) **METHOD OF REMOVING HARMFUL SUBSTANCES**

(30) Priority: 28.12.2007 JP 2007340154
(71) Applicant: Ryncosmos, Llc., New York, NY 10021 (US)
(72) Inventor: KUBOTA, Yoshinori, Tokyo 124-0001 (JP)
(74) Representative: Dannenberger, Oliver Andre
(86) International application number: PCT/JP2008/073868
(87) International publication number: WO 2009/084696

(57) **Abstract**

Method for removing a toxic substance to remove the toxic substances such as carbon monoxide, carbon dioxide and the particulate matter is provided without using a catalyst by the rare metal from the gas which an internal combustion engine and an incinerator exhausted, comprising:
primary step B for releasing the gas from which an internal combustion engine and an incinerator (A) exhausted in liquid S which contained a microbe comprising the cell body group including the photosynthesis bacteria and a microbe comprising the cell body group including the yeast fungus and a microbe comprising the cell body group including the lactic acid bacterium and thus carbon monoxide and carbon dioxide and particulate matter are removed therefrom;
residual toxic substance removing step C for removing particulate matter from the gas further;
secondary step D for contacting the gas with burned substance which contained at least a microbe comprising the cell body group including the photosynthesis bacteria, a microbe comprising the cell body group including the yeast fungus and a microbe comprising the cell body group including the lactic acid bacterium to remove carbon monoxide and carbon dioxide from the gas further; and
deodorizing step E for deodorizing the gas by deodorizing means.

## Description

### [FIELD OF THE INVENTION]

The present invention relates to method for removing a toxic substance to remove the toxic substances such as carbon monoxide, carbon dioxide and the particulate matter without using a catalyst by the rare metal from the gas which an internal combustion engine and an incinerator exhausted about method for removing a toxic substance in detail.

### [BACKGROUND ART]

The gas exhausted generated by burning fuel and garbage like an internal combustion engine and an incinerator includes carbon monoxide as a toxic substance.
As conventional technology to remove the carbon monoxide, the oxidation catalyst which formed a filter device in rare metals such as platinum or the vanadium is well-known. By such an oxidation catalyst, gas is put through the filter device, and the oxidation is reacted by a rare metal, and carbon monoxide of the whole gas is converted into carbon dioxide.
Also, a lot of particulate matters are included in gas drained from a diesel engine and an incinerator as a toxic substance. As technology to remove the particulate matter, technology to catch a particulate matter with a filter device comprising the heater plate which a lot of bores were emptied into-resistant is disclosed in patent document 1.

However, it is necessary to use rare metals such as platinum or the vanadium in large quantities so as to be able to put purification levels of the exhaust by the oxidation catalyst in a standard of environmental protection which becomes severer and severer. Because of this, a rare metal is drying up and amount of the rare metal is in the tendency to remarkable rise and these become the social problem.
Even more particularly, the carbon dioxide produced by oxidation reaction is greenhouse gas causing global warming, and it is with the global problem to reduce the burst size of this carbon dioxide.
Also, the particulate matter is easy to float in the atmosphere and is considered to be the main factor of the air pollution since it is deposited to the human respiratory tract and lungs and harms health, and thus the further removal is expected.

### [DISCLOSURE OF THE INVENTION]

### [PROBLEM TO BE SOLVED BY THE INVENTION]

The purpose of the present invention is to solve the aforementioned problem and to provide method for removing a toxic substance to remove the toxic substance such as carbon monoxide, carbon dioxide and the particulate matter without using a catalyst by the rare metal from the gas which an internal combustion engine and an incinerator exhausted.

### [MEANS TO SOLVE THE PROBLEM]

The technical means which the present invention made to achieve the problem is a method for removing toxic substance from gas, the method comprising: releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas.
Further, another technical means is a method for removing toxic substance from gas, the method comprising: a primary step for releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas; and a secondary step for contacting the gas passed through the primary step with burned substance which contained at least a microbe comprising the cell body group including the photosynthesis bacteria, a microbe comprising the cell body group including the yeast fungus and a microbe comprising the cell body group including the lactic acid bacterium to remove the residual toxic substance from the gas further.
Further, another technical means is a method for removing toxic substance from gas, the method comprising: a primary step for releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas; a secondary step for contacting the gas passed through the primary step with burned substance which contained at least a microbe comprising the cell body group including the photosynthesis bacteria, a microbe comprising the cell body group including the yeast fungus and a microbe comprising the cell body group including the lactic acid bacterium to remove the residual toxic substance from the gas further; and a removing step for removing the residual toxic substance from the gas passed through the secondary step further.
Further, another technical means is a method for removing toxic substance from gas, the method comprising: a primary step for releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas; a removing step for removing the residual toxic substance from the gas passed through the primary step further; and a secondary step for contacting the gas passed through the removing step for removing toxic substance with burned substance which contained at least a microbe comprising the cell body group including the photosynthesis bacteria, a microbe comprising the cell body group including the yeast fungus and a microbe comprising the cell body group including the lactic acid bacterium to remove the residual toxic substance from the gas further.

In addition, another technical means is a method for removing toxic substance from gas, the method comprising: arranging burned substance which contained at least a microbe comprising the cell body group including the photosynthesis bacteria, a microbe comprising the cell body group including the yeast fungus and a microbe comprising the cell body group including the lactic acid bacterium in liquid which contained at least a microbe comprising the cell body group including the photosynthesis bacteria, a microbe comprising the cell body group including the yeast fungus and a microbe comprising the cell body group including the lactic acid bacterium; and releasing the gas including toxic substance into the liquid to remove the toxic substance from the gas.
Further, another technical means is a method for removing toxic substance from gas, the method comprising: a primary step for arranging burned substance which contained at least a microbe comprising the cell body group including the photosynthesis bacteria, a microbe comprising the cell body group including the yeast fungus and a microbe comprising the cell body group including the lactic acid bacterium in liquid which contained at least a microbe comprising the cell body group including the photosynthesis bacteria, a microbe comprising the cell body group including the yeast fungus and a microbe comprising the cell body group including the lactic acid bacterium, and releasing the gas including toxic substance into the liquid to remove the toxic substance from the gas; and a removing step for removing the residual toxic substance from the gas passed through the first step further.

In addition, the aforementioned method for removing toxic substance from gas may have a step for deodorizing gas as a final treatment and further, may release gas as a minute bubble into liquid when the gas is released in the liquid.

### [EFFECT OF THE INVENTION]

According to the present invention, a method for removing a toxic substance such as carbon monoxide, carbon dioxide and the particulate matter got possible to be provided without using a catalyst by the rare metal from the gas which an internal combustion engine and an incinerator exhausted.

### [BEST MODE FOR CARRYING OUT THE INVENTION]

A method for removing a toxic substance according to the present invention is explained in detail as follows. Note that the removing in the present invention is a concept to include not only the case that all the toxic substances are removed but also the state (the state that the discharge of the toxic substance was reduced) removed partly of the toxic substance. Also, carbon monoxide, carbon dioxide, a particulate matter can be nominated for an example with the toxic substance in the present invention, but it is not limited to these, and is not interpreted at all, when it is a concept to include other common knowledge toxic substances within the present invention, and the concept of the toxic substance which can be removed in each of the below-mentioned embodiment by an each of process is different, there is. Also, if the particulate matter is a very small particle floating in the air, its concept includes a dust, a soot particle and the mine dust.

### [Embodiment 1]

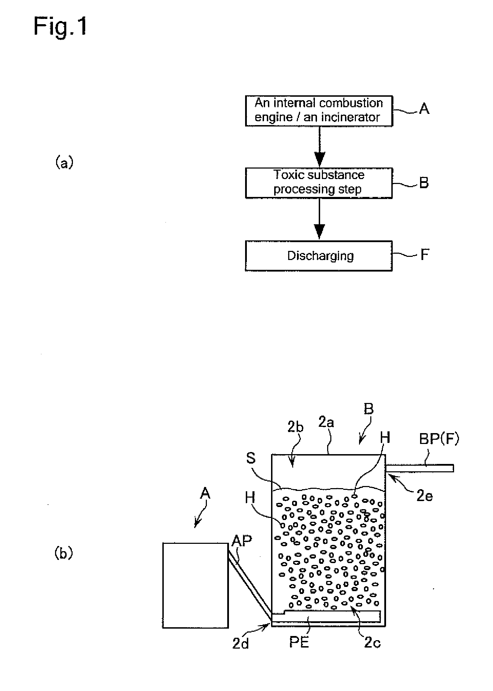

FIG. 1 (a) is a flow diagram presenting the process of the method for removing a toxic substance by embodiment 1. Also, FIG. 1 (b) shows outline constitution by the present embodiment of a processing unit removing a toxic substance.
In accordance with the embodiment, there is adopted method for discharging (F) gas including the toxic substances such as carbon monoxide, carbon dioxide, the particulate matter drained from an internal combustion engine and an incinerator (A) after introducing the same in step for processing a toxic substance B and then was processed.
In the toxic substance processing step B, gas is reacted to a microbe contained in liquid S and is processed.
The liquid S contains at least a microbe comprising the cell body group including the photosynthesis bacteria, a microbe comprising the cell body group including the yeast fungus and a microbe comprising the cell body group including the lactic acid bacterium.
The toxic substances such as carbon monoxide, carbon dioxide, the particulate matter included in the gas are removed by responding these microbes with the gas via the liquid inside.

The followings are explanation of outlines of one constitution embodiment of a processing unit used by method for removing a toxic substance in accordance with the present example.
The processing unit adopted in the present embodiment comprises introduction bore 2d for introducing gas to be processed and discharge port 2e exhausting processed gas outside, it is constructed as a toxic substance processing tank 2a formed in hermetically-sealed state other than the introduction bore and the discharge port and the aforementioned liquid S accommodated in the toxic substance processing tank 2a, and the aforementioned toxic substance processing step B is processed in the inside of this processing unit.
Introduction bore 2d is installed in lower region 2c of toxic substance processing tank 2a, pipe AP to introduce gas exhausted by an internal combustion engine and an incinerator (A) into toxic substance processing tank 2a is connected to this introduction bore 2d.
Discharge port 2e is installed in upper region 2b of the toxic substance processing tank 2a and is connected to pipe BP exhausting the gas that a toxic substance was removed via inside of the liquid S in this toxic substance processing tank 2a to outside.
Also, in the embodiment, liquid S accommodated in toxic substance processing tank 2a is filled so as to leave a space within upper region 2b of toxic substance processing tank 2a.

In accordance with the embodiment, pipe AP is comprised as follows.
Pipe AP is inserted in lower region 2c in toxic substance processing tank 2a through introduction bore 2d from outside of the toxic substance processing tank 2a, and in the lower region 2c, has extension portion PE formed so as to cover the base of toxic substance processing tank 2a.
And, a lot of minute bores are formed on the extension portion PE. Thus, if it is formed, in the deepest part of liquid S, gas is released in state of minute bubble H from the lot of minute bores into liquid S. It is preferable to adopt more minute bubble H rather than big bubble because a microbe contained in liquid S actively contact with the minute bubble H and thus processing gas is accelerated.
Also, it is possible to arrange several pieces of this pipe AP in lower region 2c.
Even more particularly, in the present embodiment, pipe AP is formed for form of straight pipe, but it can be arranged in spiral fashion within lower region 2c.
Note that pipe AP is not interpreted only with a form adopted in the present embodiment, for example, it may be a form closely-fitted in introduction bore 2d from outside thereof, and it may be modified within scope of the present invention.

According to the processing unit, the exhaust from an internal combustion engine and an incinerator (A) is released in liquid S in toxic substance processing tank 2a through pipe AP.
Once the gas is released in liquid S, carbon monoxide and carbon dioxide of the whole gas are removed by microbe contained in liquid S and simultaneously particulate matters is also separated from the gas to be absorbed in liquid S, and then is deposited at the bottom of toxic substance processing tank 2a by the microbe which liquid S contains (toxic substance processing step B). In other words, the gas processed in the toxic substance processing step B via inside of the liquid S and once-reserved in upper region 2b of toxic substance processing tank 2a is already removed carbon monoxide and carbon dioxide and a particulate matter therefrom.
Thus, the gas discharged (F) to outside via pipe BP from upper region 2b is clean gas that a toxic substance is removed as mentioned above.

### [Embodiment 2]

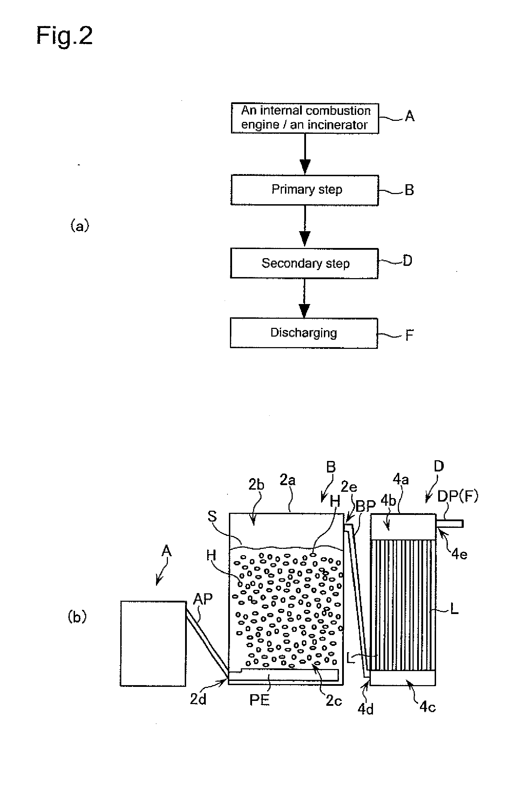

FIG. 2 (a) is a flow diagram presenting the process of the method for removing a toxic substance by embodiment 2.
In accordance with the embodiment, primary step B and secondary step D are provided. In other words, there is adopted method that gas including the toxic substances such as carbon monoxide, carbon dioxide, the particulate matter drained from an internal combustion engine and an incinerator (A) is introduced in a primary step B to remove a toxic substances, and the residual toxic substance which was not able to be removed more in the primary step B is removed in the secondary step D and after that the gas is discharged (F) to outside.
When the toxic substances such as carbon monoxide or the carbon dioxide which were not able to be removed completely in the primary step B and thus were remained, the carbon monoxide and carbon dioxide are further removed in this secondary step D. Thus, even if it is the present embodiment, when removing process in the primary step B is finished, there is a possibility that the toxic substances can be removed entirely already at the stage of finishing the primary step B like the embodiment 1.
Note that the explanation of the primary step B is omitted in the present embodiment since the primary step B is the same contents as that of the toxic substance processing step B explained in the aforementioned embodiment 1. Therefore, a secondary step D is herein explained.

The gas which passed through a primary step B is processed by reaction to a microbe contained by burning body L in a secondary step D.
Constitution of burning body L is based on ceramics, which contain at least a microbe comprising the cell body group including the photosynthesis bacteria, a microbe comprising the cell body group including the yeast fungus and a microbe comprising the cell body group including the lactic acid bacterium.
Also, the burning body L adopted in the present embodiment has through-hole in which gas can pass. Thus, it is desirable that the area where gas contact with the burning body L is increased and thus processing by the microbe is promoted in the area.
The toxic substances such as carbon monoxide, the carbon dioxide and so on included (remains) in the gas are removed by reacting to the gas which passed through the primary step B at the surface of burning body L.

The followings are explanation of outlines of one constitution embodiment of a processing unit used by method for removing a toxic substance in accordance with the present embodiment. (FIG. 2 (b)).
Note that because the processing unit of primary step B of the present embodiment has the same constitution as that of a toxic substance processing step B explained in the above embodiment 1, the explanation of the processing unit of the primary step B is omitted, the constitution of the processing unit of a secondary process D is explained mainly. Note that toxic substance processing tank 2a explained in the above embodiment 1 is referred to as a primary step processing tank 2a in the present embodiment.

The processing unit adopted in the present embodiment comprises introduction bore 4d which introduces gas drained through pipe BP from primary step B and discharge port 4e exhausting the processed gas to outside, it is constructed as a secondary step processing tank 4a formed hermetically-sealed state other than the introduction bore and the discharge port, and the aforementioned burned substance L accommodated in the secondary step processing tank 4a, and the aforementioned secondary step D is processed in the inside of this processing unit.
Introduction bore 4d is installed in lower region 4c of the secondary step processing tank 4a, pipe BP to introduce gas from toxic substance processing tank 2a into inside of the secondary step processing tank 4a is connected to this introduction bore 4d.
Discharge port 4e is installed in upper region 4b of the secondary step processing tank 4a and is connected to pipe DP exhausting the gas that a toxic substance was removed by burning body L in this secondary step processing tank 4a to the outside.

Burning body L is installed in the inside of the secondary step processing tank 4a to leave spaces for upper region 4b and lower region 4c.
Also, the through-hole of burning body L is provided that the direction of hole penetration of the through-hole is placed to fit to the direction of gas flow in the secondary step processing tank 4a, namely in vertical direction in the present embodiment. By this, gas can pass a through-hole of burning body L.

According to the aforementioned processing unit, the gas drained from primary step processing tank 2a is released through pipe BP to upper region 4b inside of secondary step processing tank 4a. In this step, an internal combustion engine and the incinerator (A) continuously exhaust gas and thus the gas passes through primary step processing tank 2a and flows into secondary step processing tank 4a serially. By this, gas flows for lower region 4c from upper region 4b in secondary step processing tank 4a. And when gas flows, while contacting with the exterior surface of the burning body L or while contacting with the inner surface of the through-bore, the gas is reacted to a microbe containing in burning body L and thus the toxic substances such as carbon monoxide and carbon dioxide remained in the gas are removed.
And the gas that a secondary step processing was completed is exhausted from pipe DP of secondary step processing tank 4a to the outside of the secondary step processing tank 4a.
Thus, the gas which passed through pipe DP from lower region 4b and then discharged (F) to the outside is the clean gas from which a toxic substance was removed as mentioned above.

Note that, with the processing unit by the present embodiment, although burning body L is placed so that direction of the through-hole of the burning body L fit to the direction where gas flowed through the through-hole, it may not be limited to this and direction of the through-hole may be changed from the direction of the gas-flowing direction. In this case, the gas flowing in a through-hole of burning body L flows more slowly than the gas flowing in the exterior surface of the burning body and thus reaction time for the gas with microbe comparatively get longer within the through-hole and the process for removing the toxic substance is promoted.

### [Embodiment 3]

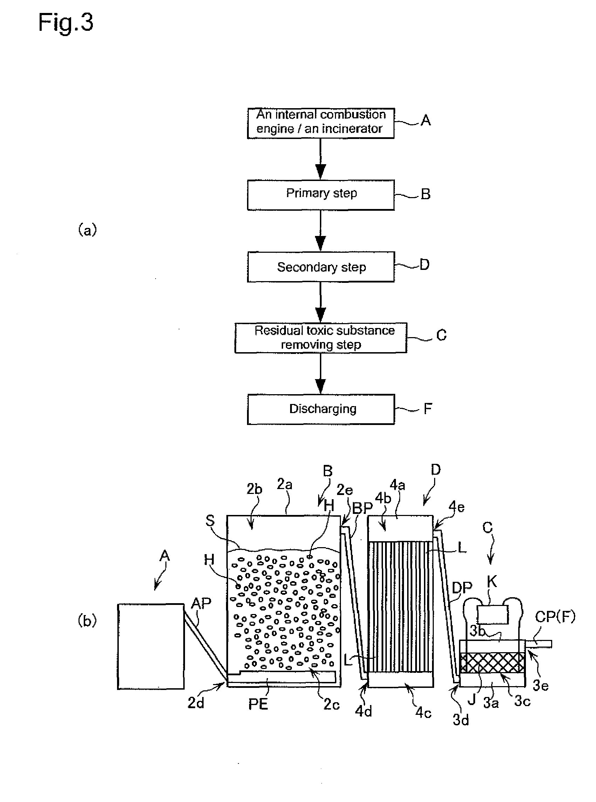

FIG. 3 (a) is a flow diagram presenting the step of the method for removing a toxic substance by embodiment 3.
In accordance with this embodiment, there is provided a removing step for removing the residual toxic substance C to remove residual toxic substance in the gas further in addition to the primary step B and the secondary step D. In other words, the gas of an internal combustion engine and the incinerator (A) is processed for removing the toxic substances such as carbon monoxide and carbon dioxide or the particulate matter in a primary step B, residual toxic substances such as carbon monoxide or the carbon dioxide which were not able to be removed from the gas in a primary step B are removed further in a secondary step D, and the residual toxic substances such as the particulate matters which passed through the secondary step D and was not able to be removed from the gas were removed by the removing step for removing the residual toxic substance C and then discharged (F) to outside.
In this removing step for removing the residual toxic substance C, when the residual toxic substances such as the particulate matters and so on which were not able to be removed in a primary step B, the particulate matter is further removed. Thus, even if it is the present embodiment, when removing process in the primary step B is finished, there is a possibility that the toxic substances can be removed entirely already at the stage of finishing the primary step B like the embodiment 1.
Note that the explanations of the primary step B and the secondary step D are omitted in the present embodiment since the primary step B is the same contents as that of the toxic substance processing step B explained in the aforementioned embodiment 1 and the secondary step D is the same contents as that of the step explained in the aforementioned embodiment 2. Therefore, it is described mainly on constitution of a residual toxic substance removing step C.
The gas which passed through a secondary step D is processed by reaction to residual toxic substance removing means J in a residual toxic substance removing step C to remove residual particulate matter of the gas and thus processed for removing the particulate matter from the gas.

The followings are explanation of outlines of one constitution embodiment of a processing unit used by method for removing a toxic substance in accordance with the present embodiment. (FIG. 3 (b)).
Note that because the present embodiment has constitution that the processing unit for residual toxic substances removing step C is provided after the processing unit for a primary step B and the processing unit for a secondary step D, and the processing unit of primary step B and the processing unit of secondary step D are explained in the aforementioned embodiment 2, thus it is herein described mainly on the constitution of the processing unit of a residual toxic substances removing step C.

The processing unit adopted in the present embodiment comprises introduction bore 3d which introduces gas drained through pipe DP from secondary step D and discharge port 3e exhausting the processed gas to outside, it is constructed as residual toxic substances removing tank 3a formed hermetically-sealed state other than the introduction bore and the discharge port, and the aforementioned burned substance L accommodated in the secondary step processing tank 3a, and the aforementioned secondary step C is processed in the inside of this processing unit.
Introduction bore 3d is installed in lower region 3c of the residual toxic substance removing tank 3a, pipe DP to introduce gas from secondary step processing tank 4a into inside of the residual toxic substance removing tank 3a is connected to this introduction bore 3d.
Discharge port 3e is installed in upper region 3b of the residual toxic substance removing tank 3a and is connected to pipe CP exhausting the gas that a toxic substance was removed by residual toxic substance removing means J in this residual toxic substance removing tank 3a to the outside.

Residual toxic substance removing means J is installed in the inside of residual toxic substance removing tank 3a to leave space for upper region 3b and lower regions 3c.
The residual toxic substance removing means J of the present embodiment has an inner space through which gas can pass and electric-charge by power supply K provided outside generate negative ion in the internal space of the aforementioned residual toxic substance removing means J. In this regard, the positively-charged particulate matter by negative ion is adsorbed and removed from gas.

According to the aforementioned processing unit, the gas drained from secondary step processing tank 4a is released through pipe PD to lower region 3c in residual toxic substance removing tank 3a. In this regard, an internal combustion engine and the incinerator (A) exhausting gas continuously and thus the gas passes through secondary step processing tank 4a and flow into residual toxic substance removing tank 3a serially. In this regard, within residual toxic substance removing tank 3a, gas flows for upper region 3b from lower region 3c. And when gas flows through internal space of the aforementioned residual toxic substance removing means J, negative ion reacts the gas, and residual positively-charged particulate matter in the gas is removed.
And the gas that residual toxic substance removing process is completed is exhausted from pipe CP of residual toxic substance removing tank 3a to the outside of residual toxic substance removing tank 3a.
Thus, the gas which pass through the pipe CP from upper region 3b and then was discharged (F) to the outside is the clean gas that a toxic substance was removed as mentioned above.

### [Embodiment 4]

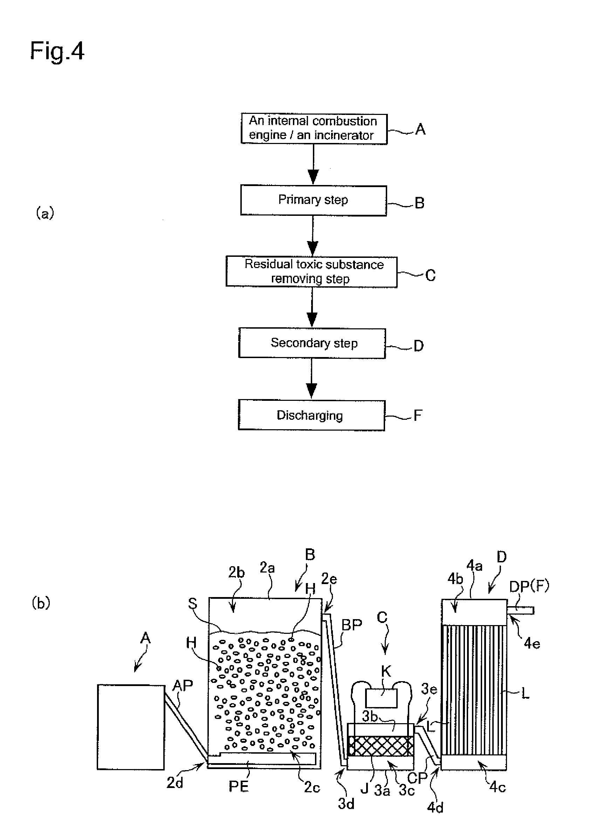

By above embodiment 3, there is adopted a residual toxic substance removing step C for processing removal of residual toxic substance after a primary step B and a secondary step D. In this embodiment, there is adopted a method for performing residual toxic substance removing step C like a flow diagram shown in FIG. 4 (a) at an interval of a primary step B and a secondary step D. In other words, carbon monoxide and carbon dioxide and a particulate matter were removed from gas drained from an internal combustion engine and the incinerator (A), and among the toxic substances which could not be removed in primary step B and remained in the gas, a particulate matter was removed in a residual toxic substance removing step C, and further even if the gas passed through this residual toxic substance removing step C, when carbon monoxide and carbon dioxide remained in the gas, the gas is discharged (F) to outside after the carbon monoxide and carbon dioxide were removed in secondary step D.
In this case, an effect like above embodiment 3 can be obtained.

A processing unit in the present embodiment is similar to that of the embodiment 3 in the constitution as the processing unit used for a toxic substance removing method. In this embodiment, pipe BP of a processing unit used in a primary step is connected to an introduction bore of residual toxic substance removing tank 3a in the present embodiment, pipe CP connected to the introduction bore of the processing unit used for a secondary step D is connected to the discharge port.
The constitution of the processing unit by each step and the function/effect are similar to those of previously described claims 1-3 and thus the explanation thereof is omitted.

### [Embodiment 5]

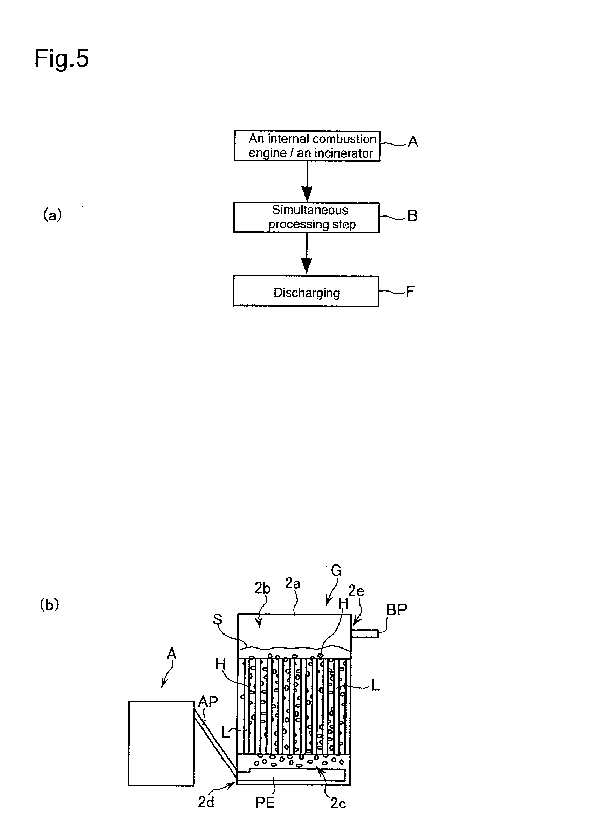

In accordance with this embodiment, processing by burning body L explained in embodiment 2 is done. In other words, as shown in a flow diagram of FIG. 5 (a), there is adopted a method for removing the toxic substance such as carbon monoxide and carbon dioxide and the particulate matter to be included in gas are removed. In other words, as shown in a flow diagram of FIG. 5 (a), the gas drained from an internal combustion engine and an incinerator (A) is done a simultaneous processing step (G) by liquid S and burning body L and then is discharged (F) to outside.
Even if it is in this embodiment, an effect like above embodiment 2 can be obtained.

Next, the followings are explanation of outlines of one constitution example of a processing unit processed along a flow diagram of FIG. 5 (a) by the method for removing toxic substance according to the present embodiment is shown in FIG. 5 (b).
The simultaneous processing step (G) processed by liquid S containing microbe and burning body L contained microbe is processed in the inside of toxic substance processing tank 2a
In other words, the processing unit of the present embodiment places burning body L used in a secondary step D in a toxic substance processing tank 2a accommodated liquid S used for a primary step B of the aforementioned embodiment 2.
In this case, pipe AP to introduce the exhaust from an internal combustion engine and an incinerator (A) into inside of toxic substance processing tank 2a is connected to introduction bore 2d placed in lower region 2c of toxic substance processing tank 2a, and pipe BP to exhaust the processed gas by the simultaneous processing step (G) is placed in discharge port 2e provided in upper region 2b of toxic substance processing tank 2a.

Note that, in the case of the present embodiment, it is preferable for burned substance L to have the through-hole which gas can pass like above embodiment 2. Even more particularly, like above embodiment 1, it is preferable to adopt constitution (constitution of pipe AP comprising the extension portion PE) that can release gas as minute bubble H in liquid S.
The gas is processed with both burned substance L which contained liquid S and microbe which contained a microbe in processing of the (G) at the same time in a processing process. Other constitution and the function/effect of this embodiment is similar to the aforementioned embodiment 2 and thus it is omitted.

Note that after a simultaneous processing step (G) by the present embodiment is done, a residual toxic substance removing step C explained in embodiment 3 may be processed.
In this case, the processing unit of this case may be provided with residual toxic substance removing tank 3a explained in the embodiment 3 other than toxic substance processing tank 2a.
Also, the simultaneous processing step (G) in this embodiment may be re-arranged with the aforementioned primary step (B) in the embodiment 2 to the embodiment 4. In this case, the removed efficiency of the toxic substance is further improved since processing by burning body L is done redundantly.

### [Embodiment 6]

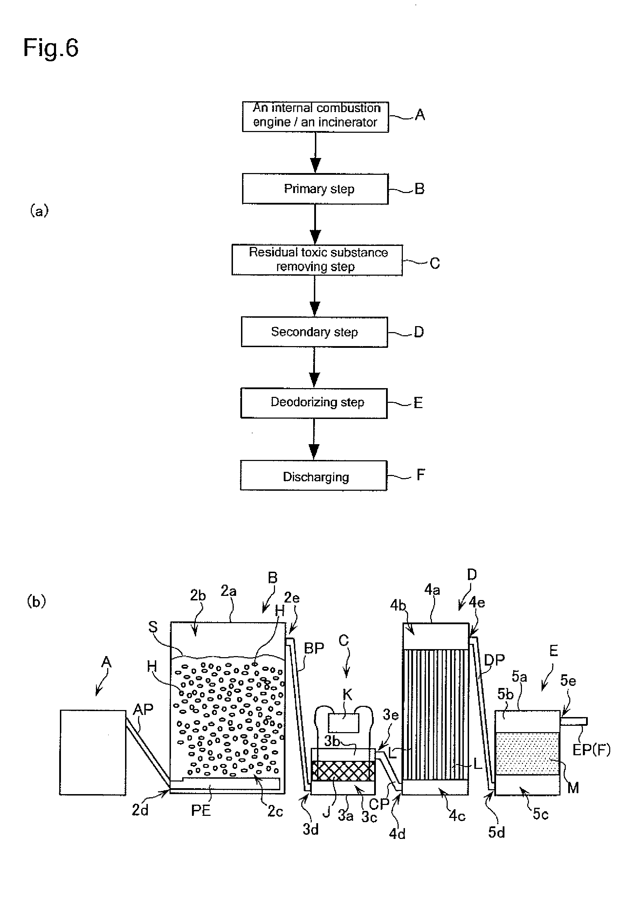

In the last of the processing processes explained with above embodiment 1 to embodiment 5, a deodorizing step E may be provided as the last process.
In accordance with the embodiment, as an example, a deodorizing step E is provided in addition to a processing step explained in the above embodiment 4 (cf. flow diagram of FIG. 6 (a)).
In other words, toxic substance such as carbon monoxide and carbon dioxide and a particulate matter were removed from the gas of an internal combustion engine and the incinerator (A) in primary step B, and residual toxic substance such as particulate matter and so on which could not be removed in primary step B and remained in the gas was removed in a residual toxic substance removing step C, and further residual toxic substance such as carbon monoxide and carbon dioxide and son which could not be removed in primary step B and remained in the gas was removed in secondary step D, and the gas is discharged (F) to outside after the gas is deodorized in the deodorizing step E.
Note that since primary step B of the present embodiment has the same contents as those of step of toxic substance processing step B explained in the aforementioned embodiment 1, residual toxic substance processing step C of the present embodiment has the same contents as those of step of residual toxic substance processing step C explained in the aforementioned embodiment 3, and secondary step D of the present embodiment has the same contents as those of step of secondary step D explained in the aforementioned embodiment 2, it is described mainly on constitution of a deodorizing step E and thus the explanation s of primary step B, residual toxic substance removing step C and secondary step D are omitted.
The gas which passed through a residual toxic substance removing step C is reacted to deodorizing means M in a deodorizing step E and thus deodorize unpleasant bad-smelling of the whole gas.

Next, an outline of one constitution example of a processing unit processed along a flow diagram of FIG. 6 (a) is shown in FIG. 6 (b) and is explained in accordance with the figures.
An outline of one constitution example of a processing unit used by method for removing a toxic substance by the present embodiment is explained (FIG. 6 (b)).
Note that it is constitution of the present embodiment comprises in turn, the processing unit in primary step; residual toxic substance removing step C; the processing unit in secondary step D; and the processing unit in deodorizing step E finally. The processing unit in primary step B and the processing unit in secondary step D are explained in the aforementioned embodiment 2, the processing unit in residual toxic substance removing step C is explained in the aforementioned embodiment 3 and thus constitution of processing unit for deodorizing step E is herein explained mainly.

The processing unit adopted in the present embodiment comprises introduction bore 5d which introduces gas drained from secondary step D through pipe DP; and discharge port 5e discharging the processed gas to outside. The deodorizing step processing tank 5a is formed in hermetically-sealed state other than the introduction bore and the discharge port and the aforementioned deodorizing means M is accommodated in deodorizing step processing tank 5a and the aforementioned deodorizing step E is processed inside of the processing unit.
Introduction bore 5d is installed in lower region 5c of deodorizing step processing tank 5a and pipe DP to introduce gas from secondary step processing tank 4a into inside of deodorizing step processing tank 5a is connected to this introduction bore 5d.
Discharge port 5e is installed in upper region 5b of deodorizing step processing tank 5a and pipe EP exhausting the gas from which an unpleasant smell was deodorized by deodorization means M in deodorizing step processing tank 5a to the outside.

Deodorizing means M is installed in the inside of the aforementioned deodorizing step processing tank 5a so as to leave space for upper region 5b and lower region 5c.
Further, the deodorizing means M of the present embodiment has internal space therein so that gas may passes through the inner space and so that an unpleasant smell in gas may be deodorized when the gas passed through the space. For the deodorizing means M, the means that a bad-smelling molecule is adsorbed and thus deodorized by a minute bore of porous body such as the active carbon is adopted in the present embodiment.

According to the aforementioned processing unit, the gas drained from secondary step processing tank 4a is released through pipe DP in a deodorizing process to lower region 5c in inner portion of deodorizing step processing tank 5a. Since an internal combustion engine and the incinerator (A) is exhausting gas continuously, the gas passes through secondary step processing tank 4a and then it flows into deodorizing step processing tank 5a serially. By this, gas flows for upper region 5b from lower region 5c in deodorizing step processing tank 5a. And when gas flows, the gas passes through an inner space of deodorizing means M and thus is deodorized.
And the gas that process of deodorizing step is completed is exhausted from pipe EP of deodorizing step processing tank 5a to the outside of deodorizing step processing tank 5a.
Thus, the gas passed through pipe EP from upper region 5b and then was discharged (F) to the outside is the clean gas that a toxic substance was removed as above mentioned.

Note that a microbe comprising the cell body group including the photosynthesis bacteria, a microbe comprising the cell body group including the yeast fungus and a microbe comprising the cell body group including the lactic acid bacterium which are used in primary step B and secondary step D of the aforementioned each embodiment may be at least contained and the other microbes may be added therein. In that case, it may be hoped that it makes the activity of the microbe further become active. Also, the ratio of each fungi shall be set depending on the density of toxic substance of the expectation voluntarily.

With the processing unit explained with embodiment 2 to embodiment 4, each processing tank is arranged horizontally in line, however how to arrange the processing tank may be other placement forms. For example, it can line up lengthwise to the order of the processing process. Also, each processing tank is not necessarily connected with pipes and the processing tank contact closely each other and thus directly connected without pipes provided that the gas may flow each processing tank.
Even more particularly, plural processing units may be constructed to single tank in a mass. For example, burning body L of secondary step D may be arranged in the space of upper region 2b of primary step processing tank 2a in embodiment 2.

### [BRIEF DESCRIPTION OF DRAWINGS]

[FIG.1] (a) is a flow diagram representing the process of method for removing toxic substance by embodiment 1, and (b) is illustration of the outline constitution of one constitution example of a processing unit used for method for removing a toxic substance by embodiment 1;
[FIG. 2] (a) is a flow diagram presenting the process of method for removing toxic substance by embodiment 2, and (b) is illustration of the outline constitution of one constitution example of a processing unit used for method for removing a toxic substance by embodiment 2;
[FIG. 3] (a) is a flow diagram presenting the process of method for removing toxic substance by embodiment 3, and (b) is illustration of the outline constitution of one constitution example of a processing unit used for method for removing a toxic substance by embodiment 3;
[FIG. 4] (a) is a flow diagram presenting the process of method for removing toxic substance by embodiment 4, and (b) is illustration of the outline constitution of one constitution example of a processing unit used for method for removing a toxic substance by embodiment 4;
[FIG. 5] (a) is a flow diagram presenting the process of method for removing toxic substance by embodiment 5, and (b) is illustration of the outline constitution of one constitution example of a processing unit used for method for removing a toxic substance by embodiment 5; and
[FIG. 6] (a) is a flow diagram presenting the process of method for removing toxic substance by embodiment 6, and (b) is illustration of the outline constitution of one constitution example of a processing unit used for method for removing a toxic substance by embodiment 6.

### [DENOTATION OF REFERENCE NUMERALS]

- A: an internal combustion engine and an incinerator;
- B: primary step;
- C: residual toxic substance removing step;
- D: secondary step;
- E: deodorizing step;
- L: burning body;
- M: deodorizing means; and
- S: liquid.

## Claims

1. A method for removing toxic substance from gas, the method comprising:
releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas.

2. A method for removing toxic substance from gas, the method comprising:
a primary step for releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas; and
a secondary step for contacting the gas passed through the primary step with burned substance which contained at least a microbe comprising the cell body group including the photosynthesis bacteria, a microbe comprising the cell body group including the yeast fungus and a microbe comprising the cell body group including the lactic acid bacterium to remove the residual toxic substance from the gas further.

3. A method for removing toxic substance from gas, the method comprising:
a primary step for releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas;
a secondary step for contacting the gas passed through the primary step with burned substance which contained at least a microbe comprising the cell body group including the photosynthesis bacteria, a microbe comprising the cell body group including the yeast fungus and a microbe comprising the cell body group including the lactic acid bacterium to remove the residual toxic substance from the gas further; and
a removing step for removing the residual toxic substance from the gas passed through the secondary step further.

4. A method for removing toxic substance from gas, the method comprising:
a primary step for releasing gas including the toxic substance into liquid which contained at least a microbe comprising the cell body group including the photosynthesis bacteria, a microbe comprising the cell body group including the yeast fungus and a microbe comprising the cell body group including the lactic acid bacterium to remove the toxic substance from the gas;
a removing step for removing the residual toxic substance from the gas passed through the primary step further; and
a secondary step for contacting the gas passed through the removing step for removing toxic substance with burned substance which contained at least a microbe comprising the cell body group including the photosynthesis bacteria, a microbe comprising the cell body group including the yeast fungus and a microbe comprising the cell body group including the lactic acid bacterium to remove the residual toxic substance from the gas further.

5. A method for removing toxic substance from gas, the method comprising:
arranging burned substance which contained at least a microbe comprising the cell body group including the photosynthesis bacteria, a microbe comprising the cell body group including the yeast fungus and a microbe comprising the cell body group including the lactic acid bacterium in liquid which contained at least a microbe comprising the cell body group including the photosynthesis bacteria, a microbe comprising the cell body group including the yeast fungus and a microbe comprising the cell body group including the lactic acid bacterium; and
releasing the gas including toxic substance into the liquid to remove the toxic substance from the gas.

6. A method for removing toxic substance from gas, the method comprising:
a primary step for arranging burned substance which contained at least a microbe comprising the cell body group including the photosynthesis bacteria, a microbe comprising the cell body group including the yeast fungus and a microbe comprising the cell body group including the lactic acid bacterium in liquid which contained at least a microbe comprising the cell body group including the photosynthesis bacteria, a microbe comprising the cell body group including the yeast fungus and a microbe comprising the cell body group including the lactic acid bacterium, and releasing the gas including toxic substance into the liquid to remove the toxic substance from the gas; and
a removing step for removing the residual toxic substance from the gas passed through the first step further.

7. A method for removing toxic substance from gas according to any of claims 1 to 6, wherein the method have a step for deodorizing gas as a final treatment.

8. A method for removing toxic substance from gas according to any of claims 1 to 7, wherein the method have a step for releasing gas as a minute bubble into liquid when the gas is released in the liquid.

9. A method for removing toxic substance from gas according to claims 1 or 5, wherein toxic substance to be removed is carbon dioxide, carbon monoxide and a particulate matter.

10. A method for removing toxic substance from gas according to any of claims 2 to 4, wherein toxic substance to be removed in the primary step is carbon dioxide, carbon monoxide and a particulate matter.

11. A method for removing toxic substance from gas according to claims 3 or 4, wherein toxic substance to be removed in the secondary process is carbon dioxide and carbon monoxide.

12. A method for removing toxic substance from gas according to claims 3 or 4, wherein a toxic substance to be removed in the step for removing the residual toxic substance is a particulate matter.
